Europäisches Patentamt

(19) European Patent Office

Office européen des brevets

(11) Publication number : **0 338 049 B1**

(12) **EUROPEAN PATENT SPECIFICATION**

(45) Date of publication of patent specification :
18.09.91 Bulletin 91/38

(51) Int. Cl.⁵ : **F02B 27/02, F02M 35/10**

(21) Application number : 88908969.4

(22) Date of filing : 06.10.88

(86) International application number :
PCT/GB88/00828

(87) International publication number :
WO 89/03473 20.04.89 Gazette 89/09

(54) ENGINE INTAKE SYSTEM.

(30) Priority : 07.10.87 GB 8723584
05.11.87 GB 8726013

(43) Date of publication of application :
25.10.89 Bulletin 89/43

(45) Publication of the grant of the patent :
18.09.91 Bulletin 91/38

(84) Designated Contracting States :
DE FR IT NL SE

(56) References cited :
EP-A- 0 159 803
GB-A- 2 117 043
SE-B- 450 717

(56) References cited :
Patent Abstracts of Japan, Vol 8, No 249,
M338, abstract of JP 59-126028, publ 1984-
07-20
Patent Abstracts of Japan, Vol 8, No 249,
M338, abstract of JP 59-126028, publ 1984-
07-20

(73) Proprietor : HALL, Keith Gordon
80 Highfield Lane
Maidenhead, Berkshire SL6 3PF (GB)

(72) Inventor : HALL, Keith Gordon
80 Highfield Lane
Maidenhead, Berkshire SL6 3PF (GB)

(74) Representative : Selby-Lowndes, Guy Francis
Charles
Moonrakers Durfold Wood
Plaistow Billinghurst West Sussex RH14 0PL
(GB)

## Description

ENGINE INTAKE SYSTEM

This invention relates to air intake systems for internal combustion engines and a method of controlling them.

There are two types of variable geometry air intake systems (1) continuously variable and (2) incrementally variable. Incrementally variable geometry intake systems function by changing from one tuned pipe length to another. To effect this change in length the intake pipe must be interrupted at the appropriate short length and a connection made to a volume reservoir. Proposed methods to achieve variable geometry systems have involved the use of either the original volume reservoir (plenum chamber) or a secondary plenum chamber. Systems of this nature are described in GB A 2121473 which take up a considerable amount of engine volume. This invention is concerned with a simple compact incrementally variable intake system.

EP-A-0159803 describes modulated tuning intake systems for multi-cylinder internal combustion engines. Dual manifold plenums are provided, one for each half of the engine cylinders, which can be connected by a valved tube to improve charging efficiency at low engine speeds.

According to the invention there is provided an internal combustion engine having tuned intake pipes to each cylinder, and interconnections between said pipes with valve means whose operation permits air flow through said interconnections in order to change the charging characteristics of the intake system, characterized in that each cylinder has an individual intake pipe interconnected to one or more individual intake pipes from other cylinders only through interconnecting ports each interconnection having an associated valve means.

A novel feature of this invention is that the intake pipes to the other cylinders become the volume reservoir for the intake pipe for the cylinder undergoing its induction phase. Hence, a simpler more compact incrementally variable intake system is achieved with the potential of optimising engine breathing throughout the speed range. The volume reservoir formed by the combination of the intake pipes may be augmented by inclusion of the central space inside the cluster and additional external volume.

Long pipe length increases the charge inertia and optimises acoustic wave phenomena at low engine speeds. At high engine speeds these effects can again be optimised by uncovering a port part way along the pipe. A compact arrangement may be achieved by bringing two or more of the inlet pipes together in a cluster. Ports within the cluster are sealed with valve means such as a common port cover termed a cluster valve. The operation of the cluster valve permits air flow between the intake pipes. The invention permits the operation of engines with a ratio between the effective pipe lengths of at least two to one by opening the valve means.

In a preferred embodiment the intake pipes for out of phase cylinders act as a plenum for the intake pipe to a cylinder in the induction phase when the valve means is open. It is thus preferred to connect only out of phase intake pipes in a single cluster. It is thus unlikely that a single cluster would contain more than four pipes.

The intake pipes from the cylinders whose induction periods are out of phase are gathered together in cluster sets each with its own valve means. The intake pipes are preferably attached in engine firing order to the valve means to improve charge inertia by eliminating flow reversals. The pipe ends of the intake pipes connected to cylinders whose induction phases overlap will be distanced from each other in the plenum chamber. Additional volume can be introduced into the space around the cluster ports.

The upstream section of the tuned pipes may be constructed of flexible material, for example when the air filter is remotely mounted. To avoid acoustic interference the pipe ends of the intake pipes connected to cylinders whose induction phases overlap can be angled such that reflected acoustic pulses are directed away from the direction of the other pipes. Alternatively baffles can be positioned within the plenum chamber to prevent any reflected acoustic pulses from one pipe end directly entering another pipe with an overlapping induction phase.

The air flow to the cylinders is preferably controlled by one or more throttle valves located either upstream or downstream of the cluster valve. The most preferred form of throttle is of a type adapted to provide an uninterrupted passage along the pipe when fully open. Preferably pairs of intake pipes share a single butterfly throttle in which the blade is housed outside the contour of the pipe when fully open.

The valve means may be constructed by any of the known techniques for valve design including gate, sleeve, plug, flap, disc butterfly, poppet or slide construction. The port section may comprise a part or all of the pipe circumference.

In order that the invention may be clearly understood it will now be described with reference to the accompanying drawings in which :

Figure 1 is a schematic diagram of an air intake system according to the invention adapted for two cylinders,

Figure 2 is a schematic diagram of a cluster valve for a pair of intake pipes, showing horizontal and vertical sections,

Figure 3 is a schematic diagram of a cluster throttle for a pair of intake pipes, showing horizontal and vertical sections,

Figure 4 is a schematic diagram of a cluster valve for a four cylinder engine, showing horizontal and vertical sections.

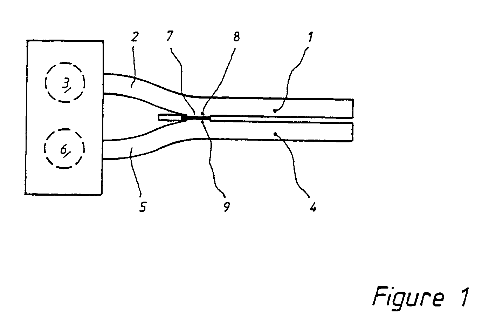

An incrementally variable geometry air intake system for two cylinders, see Figure 1, consists of two pairs of inner and outer pipes. An outer pipe 1 and an inner pipe 2 supply air to cylinder 3. A second pair of pipes consisting of an outer pipe 4 and an inner pipe 5 supply air to cylinder 6. The junction between the pipes 1 and 2 is connected to one entry port 8 of valve means consisting of a connecting valve 7 and the junction between the pipes 4 and 5 to the other entry port 9 of the valve 7.

At low engine speeds the common valve port cover 7 is closed and intake pipes 1 and 2 together with the pipes 4 and 5 function as long individual pipes, acoustic waves being reflected from the open pipe ends. At high engine speeds the vale 8 is opened allowing air flow through the ports 8 and 9. Providing the volume available is large enough the position of the ports 8 and 9 now determines the tuned length of the intake pipes and acoustic waves are reflected from the port opening. The direction of flow through the valve 7 connecting the ports 8 and 9 will alternate according to which of the cylinders 3 and 6 is in its induction phase and drawing air.

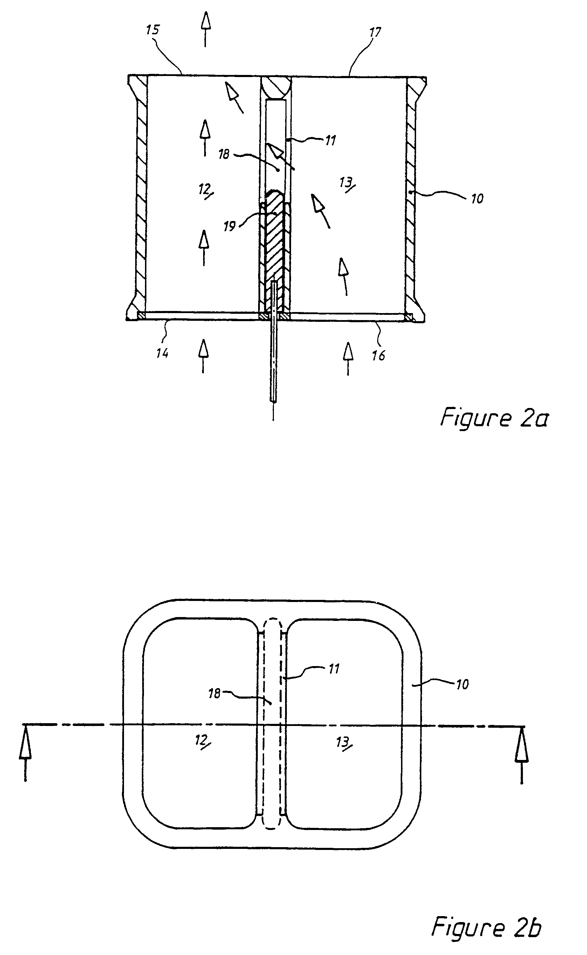

A cluster valve for a pair of pipes, see Figures 2a and 2b, consists of a housing 10 divided by a section 11 into two tube sections 12 and 13. The tube section 12 is adapted to receive an outer pipe, not shown, at inlet 14 and an inner pipe, not shown, at outlet 15. Similarly the tube section 13 is adapted to receive an outer pipe at inlet 16 and an inner pipe at outlet 17. The section 11 between the two tube sections 12 and 13 includes an aperture 18 which may be closed by valve means in the form of a movable cover 19.

When the cover 19 seals the aperture 18 each of the inner and outer pipes are connected independently to their respective cylinders. When the cover is moved to its open position each cylinder during its induction phase can draw on air from both of the upstream outer pipes 1 and 4, see Figure 1, so that air entering the inlets 14 and 16 will flow either directly or via the aperture 18 out of the outlet 15 or 17 to the cylinder undergoing its induction phase.

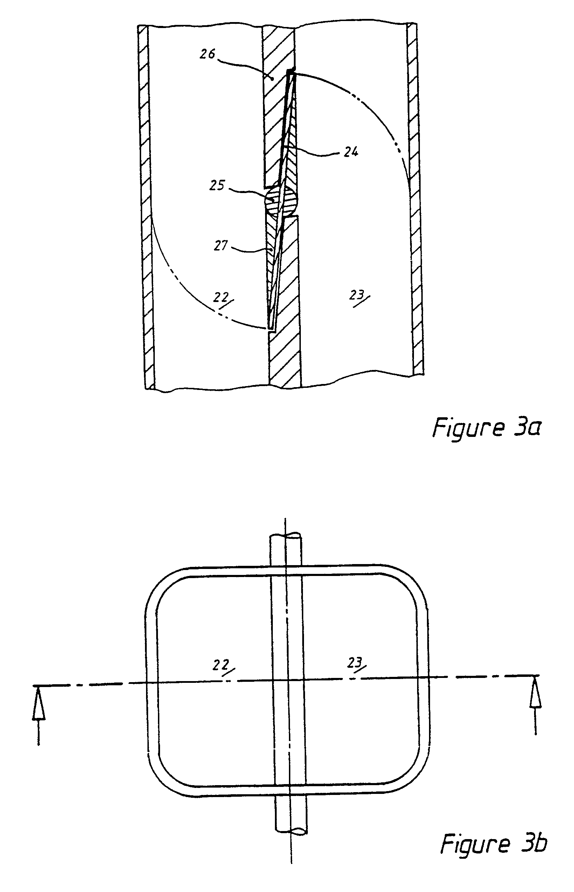

A throttle for use with a pair of intake pipes 22 and 23, see Figures 3a and 3b, consists of of a blade 24 pivottably mounted on a spindle 25. The spindle 25 is mounted in a common wall 26 between the pipes 22 and 23. When in its fully open position, as shown, the blade 24 is housed by a recess 27 cut into the common wall 26. In this manner when fully open the throttle blade provides an unobstructed passage for the flow of inlet air through the pipes 22 and 23.

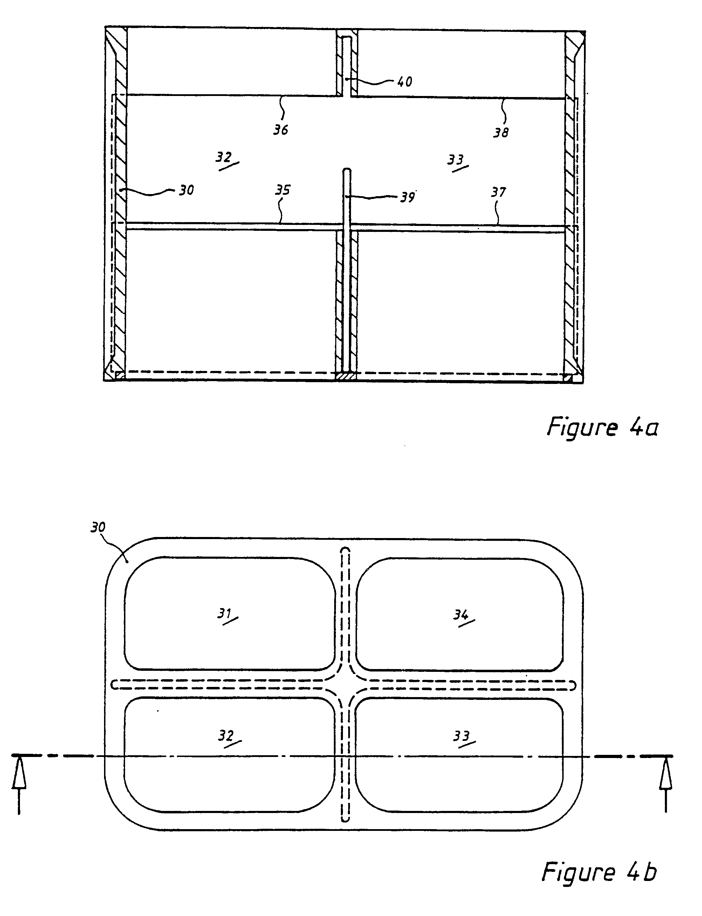

The end view of a typical cluster valve for a four cylinder engine is shown in Figure 4a. It consists of a cluster valve body 30 enclosing four pipe sections 31, 32, 33 and 34. In this embodiment each pair of pipe sections is connected to their respective cylinders in accordance with the firing order. In this way reversals of air flow through the connecting valves can be avoided. There is then no need for the charge inertia to be re-established for each firing cycle.

A section through the pipes 32 and 33 is shown in Figure 4a. The valve has faces 35 and 37 which engage seats 36 and 38 sealing the interconnection between out of phase pipes 31/32 and 33/34 respectively. A blade 39 seals the interconnection between out of phase pipes 31/34 and 32/33 and enters a pocket 40.

At low engine speeds the cluster valve is fully closed and each cylinder is receives air through its respective length of pipe as all the interconnections are sealed. In the first phase of opening of the valve only out of phase pipes 31/32 and 33/34 are interconnected and the blade 39 prevents air flowing between pipes 31/34 and 32/33 with overlapping phases. The second stage of opening commences when the valve blade 39 leaves the valve pocket 40 and all the pipes 31, 32, 33 and 34 become connected together.

It will be seen that in this preferred embodiment the cluster valve initially connects pairs of intake pipes for the cylinders which are out of phase. As engine power increases further movement of the valve connects all four intake pipes together. This arrangement provides extremely high engine efficiency throughout its speed range.

The invention has been described in detail with reference to engine having two or four cylinders. However the invention may be applied beneficially to engines having other numbers of cylinders, e.g. three, five, six and eight cylinders.

The practical high inertia intake system according to the invention enhances an engine's idling performance (a critical legislative requirement) while maintaining an adequate valve timing period necessary for maximum engine power.

The air intake system according to the invention has been illustrated without reference to the fuel supply. The embodiments shown are suitable for use with a spark ignited petrol engine using fuel injection or with a diesel engine. The long pipe lengths involved are unsatisfactory for use with a single carburetter. However the system could be used satisfactorily for the air intakes of a multi-point carburation system.

The invention has been described with respect to four stroke engines but it may equally be applied to two stroke engines. As illustrated the air intake system is shown supplied from the air cleaner plenum chamber in an engine. In the case of very high performance engines the air may be supplied by a turbo-supercharger.

## Claims

1. An internal combustion engine having tuned intake pipes to each cylinder, and interconnections between said pipes with valve means whose operation permits air flow through said interconnections in order to change the charging characteristics of the intake systems, characterized in that each cylinder has an individual intake pipe (1, 2, 4, 5) interconnected to one or more individual intake pipes from other cylinders only through interconnecting ports (9) each interconnection having an associated valve means (8).

2. An internal combustion engine according to claim 1, characterized in that two or more intake pipes (31, 32, 33, 34) are brought together to form a cluster which houses the valve means (35, 36, 37, 38, 39, 40).

3. An internal combustion engine according to claim 2, characterized in that the valve means (35, 36, 37, 38, 39, 40) is integrated to form a single valve within the cluster.

4. An internal combustion engine according to any of the preceding claims, characterized in that the intake pipes for out of phase cylinders act as an additional volume or plenum chamber for the intake pipe in the induction phase when the valve means is open.

5. An internal combustion engine according to claim 4, characterized in that the intake pipes from the cylinders whose induction periods are out of phase are gathered together in cluster sets each with its own valve means.

6. An internal combustion engine according to claim 4, characterised in that air flow is controlled by one or more throttle valves located either upstream or downstream of the valve means.

7. An internal combustion engine according to any of the preceding claims, characterised in that the upstream section of the tuned pipes is constructed of flexible material.

8. An internal combustion engine according to claim 4, characterised in that the pipe ends of the intake pipes connected to cylinders whose induction phases overlap are distanced from each other in the plenum chamber.

9. An internal combustion engine according to any of the preceding claims, characterised in that the pipe ends of the intake pipes connected to cylinders whose induction phases overlap are angled such that reflected acoustic pulses are directed away from the direction of the other pipes.

10. An internal combustion engine according to claim 8, characterised in that baffles are positioned within the plenum chamber to prevent reflected acoustic pulses from one pipe end directly entering another pipe with an overlapping induction phase.

11. An internal combustion engine according to any of the preceding claims, characterised in that the valve means opens in two stages, the first stage connects together only the intake pipes whose induction phases do not overlap, and the second stage connects all the pipes in the cluster together.

## Patentansprüche

1. Ein Verbrennungsmotor mit abgestimmten Ansaugrohren für jeden Zylinder und Verbindungen zwischen den besagten Rohren mit einer Ventilvorrichtung, deren Betätigung einen Luftstrom zwecks Änderung der Lademerkmale der Ansauganlage durch die besagten Verbindungen hindurch gestattet, dadurch gekennzeichnet, daß jeder Zylinder ein individuelles Ansaugrohr (1, 2, 4, 5) hat, das mit einem oder mehreren individuellen Ansaugrohren von anderen Zylindern nur durch Verbindungsöffnungen (9) verbunden ist, wobei jede Verbindung eine dazu gehörende Ventilvorrichtung (8) umfaßt.

2. Ein Verbrennungsmotor nach Anspruch 1, dadurch gekennzeichnet, daß zwei oder mehrere Ansaugrohre (31, 32, 33, 34) vereinigt sind, so daß sie eine Gruppe bilden, die die Ventilvorrichtung (35, 36, 37, 38, 39, 40) umfaßt.

3. Ein Verbrennungsmotor nach Anspruch 2, dadurch gekennzeichnet, daß die Ventilvorrichtung (35, 36, 37, 38, 39, 40) integriert ist, so daß sie ein einziges Ventil innerhalb der Gruppe bildet.

4. Ein Verbrennungsmotor nach einem der vorhergehenden Ansprüche, dadurch gekennzeichnet, daß die Ansaugrohre für phasenverschobene Zylinder als zusätzlicher Raum bzw. Plenumkammer für das Ansaugrohr in der Ansaugphase wirken, wenn die Ventilvorrichtung offen ist.

5. Ein Verbrennungsmotor nach Anspruch 4, dadurch gekennzeichnet, daß die Ansaugrohre von den Zylindern, deren Ansaugperioden phasenverschoben sind, in Gruppensätze zusammengefaßt sind, von denen jeder eine eigene Ventilvorrichtung umfaßt.

6. Ein Verbrennungsmotor nach Anspruch 4, dadurch gekennzeichnet, daß der Luftstrom durch ein oder mehrere Drosselventile gesteuert wird, die entweder stromaufwärts oder stromabwärts von der Ventilvorrichtung angeordnet sind.

7. Ein Verbrennungsmotor nach einem der vorstehenden Ansprüche, dadurch gekennzeichnet, daß dar stromaufwärts befindliche Teil der abgestimmten Rohre aus flexiblem Material besteht.

8. Ein Verbrennungsmotor nach Anspruch 4, dadurch gekennzeichnet, daß die Rohrenden der an Zylindern mit sich überschneidenden Ansaugphasen angeschlossenen Ansaugrohre mit Abstand voneinander in der Plenumkammer angeordnet sind.

9. Ein Verbrennungsmotor nach einem der vorstehenden Ansprüche, dadurch gekennzeichnet, daß die Rohrenden der an Zylindern mit sich überschneidenden Ansaugphasen angeschlossenen Ansaugrohre so abgewinkelt sind, daß reflektierte akustische Impulse von der Richtung der anderen Rohre weggerichtet werden.

10. Ein Verbrennungsmotor nach Anspruch 8, dadurch gekennzeichnet, daß Leitbleche innerhalb der Plenumkammer angeordnet sind, um zu verhindern, daß von einem Rohrende ausgehende reflektierte akustische Impulse unmittelbar in ein anderes Rohr mit sich Überdeckender Ansaugphase eindringen.

11. Ein Verbrennungsmotor nach einem der vorstehenden Ansprüche, dadurch gekennzeichnet, daß sich die Ventilvorrichtung in zwei Stufen öffnet, wobei die erste Stufe nur die Ansaugrohre mit sich nicht überschneidenden Ansaugphasen verbindet und die zweite Stufe alle Rohre in der Gruppe verbindet.

## Revendications

1. Moteur à combustion interne ayant des tubulures d'admission accordées à chaque cylindre et des interconnexions entre lesdites tubulures, avec un moyen de soupape dont le fonctionnement permet le passage de l'air par lesdites interconnexions afin de changer les caractéristiques de charge du système d'admission, caractérisé en ce que chaque cylindre a une tubulure d'admission individuelle (1, 2, 4, 5) qui n'est interconnectée à une ou plusieurs tubulures d'admission individuelles que par des lumières d'interconnexion (9), à chaque interconnexion correspondant un moyen de soupape (8).

2. Moteur à combustion interne selon la revendication 1, caractérisé en ce que deux tubulures d'admission ou davantage (31, 32, 33, 34) sont regroupées pour former un ensemble qui contient le moyen de soupape (35, 36, 37, 38, 39, 40).

3. Moteur à combustion interne selon la revendication 2, caractérisé en ce que le moyen de soupape (35, 36, 37, 38, 39, 40) est intégré pour former une seule soupape à l'intérieur du groupe.

4. Moteur à combustion interne selon l'une quelconque des revendications précédentes, caractérisé en ce que les tubulures d'admission pour cylindres déphasés jouent le rôle de chambre de volume ou de surpression pour la tubulure d'admission dans la phase d'admission lorsque le moyen de soupape est ouvert.

5. Moteur à combustion interne selon la revendication 4, caractérisé en ce que les tubulures d'admission des cylindres dont les périodes d'admission sont déphasées sont regroupés en ensembles dont chacun possède son propre moyen de soupape.

6. Moteur à combustion interne selon la revendication 4, caractérisé en ce que le débit d'air est réglé par une ou plusieurs soupapes papillon situées soit en amont soit en aval du moyen de soupape.

7. Moteur à combustion interne selon l'une quelconque des revendications précédentes, caractérisé en ce que la section amont des tubulures accordées est réalisée en matériau flexible.

8. Moteur à combustion interne selon la revendication 4, caractérisé en ce que les extrémités des tubulures d'admission reliées aux cylindres dont les phases d'admission se chevauchent sont espacées les unes des autres dans la chambre de surpression.

9. Moteur à combustion interne selon l'une quelconque des revendications précédentes, caractérisé en ce que les extrémités des tubulures d'admission reliées aux cylindres dont les phases d'admission se chevauchent font un angle tel que les impulsions acoustiques réfléchies soient orientées de manière à s'éloigner de la direction des autres tubulures.

10. Moteur à combustion interne selon la revendication 8, caractérisé en ce que des déflecteurs sont positionnés à l'intérieur de la chambre de surpression pour empêcher que les impulsions acoustiques d'une extrémité de tubulure entrent directement dans une autre tubulure ayant une phase d'admission chevauchant celle de la précédente.

11. Moteur à combustion interne selon l'une quelconque des revendications précédentes, caractérisée en ce que le moyen de soupape s'ouvre en deux étages, le premier étage ne reliant ensemble que les tubulures d'admission dont les phases d'induction ne se chevauchent pas, et le deuxième étage reliant ensemble toutes les tubulures de l'ensemble.

Figure 1

Figure 2a

Figure 2b

Figure 3a

Figure 3b

Figure 4a

Figure 4b